# EUROPEAN PATENT APPLICATION

(11) **EP 1 229 319 A2**
(43) Date of publication of application: **07.08.2002**
(21) Application number: 02090041.1
(22) Date of filing: 30.01.2002
(51) Int. Cl.: G01M 11/02

(54) **Method and instrument for measuring an optical characteristic of lenses in eyeglasses with frames**

(30) Priority: 01.02.2001 JP 2001025695
(71) Applicant: Kabushiki Kaisha TOPCON, Tokyo 174-0052 (JP)
(72) Inventor: Fukuma, Yasufumi, Itabashi-ku, Tokyo 174-0052 (JP); Machida, Narumi, Itabashi-ku, Tokyo 174-0052 (JP); Kato, Takeyuki, Itabashi-ku, Tokyo 174-0052 (JP)
(74) Representative: Pfenning, Meinig & Partner

(57) **Abstract**

A method for measuring an optical characteristic of lenses in eyeglasses with frames, a measuring instrument for executing it and collecting and sale systems of optical characteristic image data are disclosed herein.

The measuring instrument is used to photograph pattern projecting images of patterns for optical characteristic measurement by means of a digital camera. The pattern projecting images (17) are projected through the lenses (12R,L) based on an illuminated light. The instrument comprises engaged standing plates for engaging the eyeglasses. Mounted on one engaged standing plate is a screen on which the pattern projecting images (17) are projected.

## Description

### BACKGROUND OF THE INVENTION

### 1. Field of the Invention

This invention relates to a method capable of measuring simply an optical characteristic of lenses in eyeglasses with frames, a measuring instrument for executing it and collecting and sale systems of optical characteristic image date.

### 2. Description of the Related Art

Hitherto, so-called lens meter is known as an apparatus for measuring an optical characteristic of lenses in eyeglasses. This kind of lens meter is set in an optical shop etc. and is used for a business. The lens meter projects a measured light on lenses in eyeglasses, analyzes pattern images of patterns for optical characteristic measurement obtained through the lenses by means of operation and measures so-called, spherical surface degree (S), cylindrical degree (C) and axial angle degree (A) etc. as optical characteristic values. The measured results are precisely obtained.

By the way, if a person individual can measure individually and simply such an optical characteristic of lenses in eyeglasses with frames which are put on the person, the person can effect conveniently an order for eyeglasses to an optical shop through the Internet, specially, without going to the optical shop. A conventional lens meter is for a business and is expensive, and is not necessarily compact. Furthermore, the lens meter is not designed to buy it and to enable to measure simply by a person in the home the optical characteristic of the lenses in the eyeglasses with the frames owned by the person.

Also, in a communication sale by the Internet, when handling lenses in eyeglasses with frames, it is rare that a person knows the strong of the lenses in the eyeglasses which are put on the person and it is difficult to know the strong of the lenses as the person sits in the home. It does not correspond actually in cost to deliver to the home a measuring apparatus for the lenses because it is very expensive as described above. So, there are merits capable of measuring individually the strong of the lenses in the home, provided that the function of the measuring apparatus for the lenses is divided into a portion of detecting the pattern images of the optical characteristic of the lenses, a portion of the making electronic data and a portion of processing the electronic data and the function to make the electronic data is accomplished by use of an owned digital camera of a customer to get image data which is sent to business people by any communication means of the Internet etc. to cause it to process by the business people.

### SUMMARY OF THE INVENTION

The present invention is considered from the view-point that pattern images obtained through lenses in eyeglasses with frames are ones based on an optical characteristic finally obtained, and acquisition of the pattern images and operation of the optical characteristic can be effected separately and respectively.

An object of the present invention is to provide a method for measuring an optical characteristic of lenses in eyeglasses with frames capable of obtaining simply and inexpensively the optical characteristic, a compact measuring instrument for executing it and collecting and sale systems of optical characteristic image data.

According to one aspect of the present invention, a method for measuring an optical characteristic of lenses in eyeglasses with frames is characterized in that visible pattern images of patterns for optical characteristic measurement obtained through the lenses can be photographed by use of a digital camera.

According to the other aspect of the present invention, a method for measuring an optical characteristic of lenses in eyeglasses with frames is characterized in that the lenses are illuminated with an illuminated light and pattern projecting images for patterns for optical characteristic measurement projected on a screen through the lenses are photographed by use of a digital camera.

According to these aspects of the present invention, the pattern images obtained through the lenses in the eyeglasses with frames which are of a base of the finally obtained optical characteristic can be simply obtained.

According to the further aspect of the present invention, a measuring instrument for an optical characteristic of lenses in eyeglasses with frames is provided, wherein it is characterized in that visible pattern images of patterns for optical characteristic measurement obtained through the lenses are used to be photographed by use of a digital camera, and the instrument has a mounting frame to mountain thereon the eyeglass with frames in parallel condition to the patterns for the optical characteristic measurement.

According to the still other aspect of the present invention, an optical characteristic instrument of lenses in eyeglasses with frames is characterized in that pattern projecting images of patterns for optical characteristic measurement projected through lenses in eyeglasses with frames by an illuminated light which illuminates the lenses is used to be photographed by use of a digital camera and the instrument has engaged standing plates which engage with the eyeglasses with frames and one of which is provided with a screen on which the pattern images are projected.

According to the above aspects regarding the instrument in the present invention, it able to obtain simply and inexpensively the pattern images through the lenses by means of the compact measuring instrument.

According to the further other aspect of the present invention, a collecting system for optical characteristic image data is provided, wherein it is characterized in that pattern images of patterns for optical characteristic measurement which are photographed by a digital camera and which are visible through the lenses are collected through the Internet as optical characteristic image data.

According to the other aspect of the present invention, a collecting system for optical characteristic image data is provided, wherein it is characterized in that pattern projecting images of patterns for optical characteristic measurement which are projected through lenses in eyeglasses with frames and photographed by use of a digital camera are collected through the Internet as optical characteristic image data.

According to the collecting systems as described above, it is possible to collect the above pattern images as image data and analyze the image data in the optical shop, etc. to operate the optical characteristic of the lenses in the eyeglasses which frames which have been sent to the optical shop from the customers. Further, a collecting system for optical characteristic image data according to the other aspect of the present invention is characterized in that visible degrees of an eye sight examining chart represented on a monitor screen in condition that a person wears eyeglasses or through visibility compensating lenses are collected through the Internet together with the optical characteristic image data.

In the collecting system, the visibility degrees of the lenses in the eyeglasses as optical characteristic values obtained based on the optical characteristic image data can be compensated in condition that the eyeglasses are worn by a person and in accordance with visible degree of the eye sight examining chart through the visibility compensating lenses.

According to the other aspect of the present invention, a measuring method is provided, wherein it is characterized in that a screen is disposed between lenses in eyeglasses with frames and a digital camera to enable to measure by an unspecified digital camera.

A measuring method according to the further other aspect of the present invention is characterized in that a standard scale is disposed on a screen to enable to measure by an unspecified digital camera, thus enabling to compensate distorted aberration of or photographing magnification of the digital camera.

According to the measuring methods as described above, it is possible to photograph by use of a digital camera, e.g. a hand-type digital camera which is separated from any measuring apparatus.

Also, because the scale for the compensation of the magnification and aberration is disposed on the screen, the compensation for the magnification and aberration of the unspecified digital camera can be effected.

A sale system according to the further other aspect of the present invention is characterized in that a measuring instrument which is supplied to the home of a customer is used to measure lenses in eyeglasses with frames, and the lenses in eyeglasses with frames are made based on the measured data and are provided to the customer.

A sale system according to the other aspect of the present invention is characterized in that data measured by a measuring instrument includes image data which is analyzed to compute data necessary to make lenses in eyeglasses with frames so that the lenses in eyeglasses with frames are made based on the newly computed data and the new lenses in eyeglasses with frames are provided to a customer.

A sale system according to the other aspect of the present invention,
is characterized in that a measuring instrument produces the measured effect of an image.

A sale system according to the further aspect of the present invention is characterized in that comprises sending to business people image data which is produced by a measuring instrument and photographed by a digital camera owned by a customer, computing data necessary to make lenses in eyeglasses with fames by analyzing the image data by the business people, making lenses in eyeglasses with frames based on the new data computed, and providing the customer with the made lenses in eyeglasses with frames.

According to each of the sale systems as described above, the customer can effect an order of lenses in eyeglasses with frames as the customer sits in the home ,on the other hand, the business people can accept the order from the customer in the home.

### BRIEF DESCRIPTION OF THE DRAWINGS

The above and other objects, features and advantages of the present invention will become more apparent from the following description taken in connection with the accompanying drawings in which:
Fig.1 is a perspective view showing a schematic construction of an optical characteristic measuring instrument according to a first embodiment of the present invention;
Fig.2 is an explanatory view showing the other example of patterns for optical characteristic measurement shown in Fig.1;
Fig.3 is an explanatory view showing a digital camera for using in photographing pattern projecting images of patterns for an optical characteristic;
Fig.4 is an explanatory view showing one example of optical characteristic image data as pattern projecting images projected on a screen shown in Fig.1;
Fig.5 is an explanatory view of a personal computer owned by a person for using in sending optical characteristic image data;
Fig.6 is a perspective view showing a schematic construction of an optical characteristic measuring instrument according to a second embodiment of the present invention;
Fig.7 is an explanatory view of a pattern for an optical characteristic which are provided on a bottom plate shown in Fig.6; and
Fig.8 is a schematic view showing a sale system of lenses in eyeglasses with frames according to the present invention.

### DESCRIPTION OF THE PREFERRED EMBODIMENTS

### (FIRST EMBODIMENT)

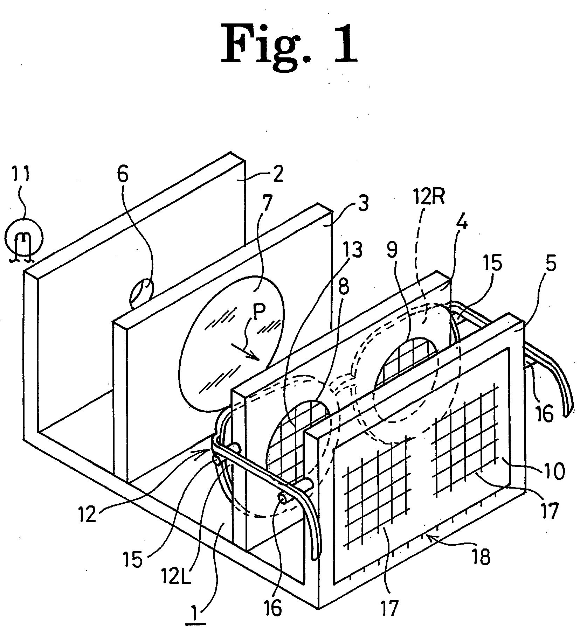

Fig. 1 is a perspective view showing a general structure of an optical characteristic measuring instrument of lenses in eyeglasses with frames according to the present invention. In Fig. 1, reference numeral 1 denotes a bottom plate, numerals 2 to 5 denote standing plates which are arranged spaced apart from each other and are secured on the bottom plate 1. The standing plate 2 is formed with a small hole 6. The standing plate 3 is provided with a collimator lens 7. The standing plate 4 is formed with a pair of openings 8 and 9 which are arranged in rightward and leftward thereof. The standing plate 5 is provided with a screen 10.

A focus of the collimator 7 places at the small hole 6. The standing plate 2 is illuminated by means of a illuminating light source 11 such as a light bulb or flash light. The illuminated light from the illuminating light source 11 is directed through the small hole 6 into the collimator lens 7 and which the illuminated light becomes a parallel beam P which illuminates the openings 8 and 9.

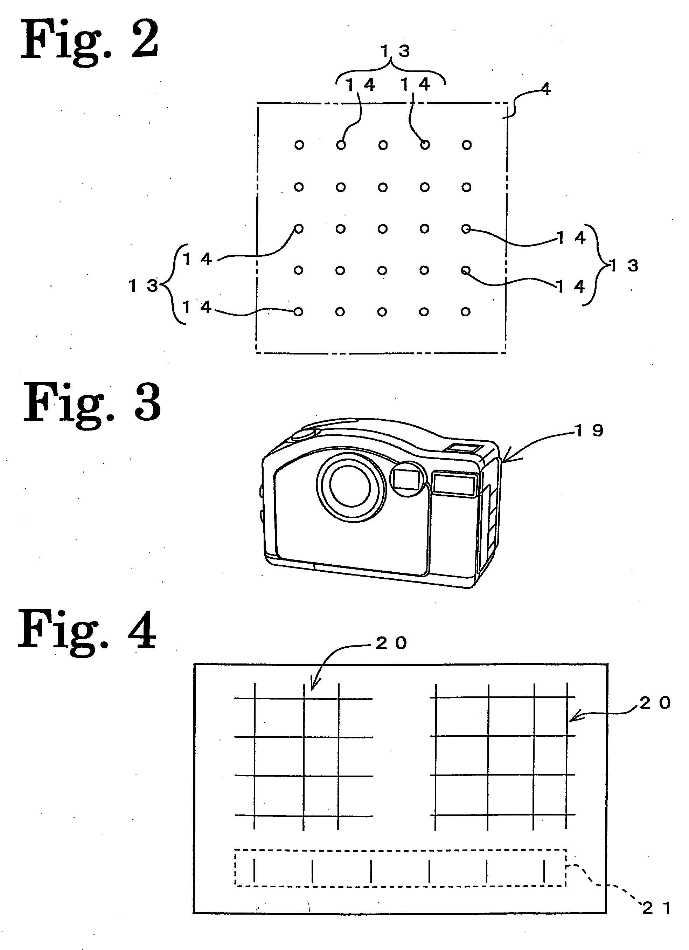

The openings 8 and 9 are provided with patterns 13, 13 for measuring an optical characteristic of lenses 12L, 12R (see Fig. 4) in glasses 12 with frame. The patterns 13, 13 which measure the optical characteristic are, in this embodiment, of orthogonal grid lines which has vertical and horizontal lines. Alternatively, the patterns may be used as pin hole windows 14 which are disposed in equal vertical and horizontal spaces as shown in Fig. 2.

The standing plates 4 and 5 act as engaged standing plates. The standing plates are provided with engaging pins 15 and 16 which are arranged on right and left opposite sides of the standing plates. The glasses 12 may be mounted on the standing plates 4 and 5. The parallel beam P illuminates through the lenses 12L, 12R the patterns 13, 13 for measuring the optical characteristic. Pattern projecting images 17, 17 of the patterns 13, 13 are formed on the screen 10 based on a light illuminated on the patterns. A scale 18 for compensating magnification of the lenses is attached to a peripheral portion of the standing plate 5. The pattern projecting images 17, 17 and scale 18 are photographed by using a digital camera 19 which is owned by an individual and is sold in an optical shop. Photographing ability of the digital camera is, preferably more one million picture elements.

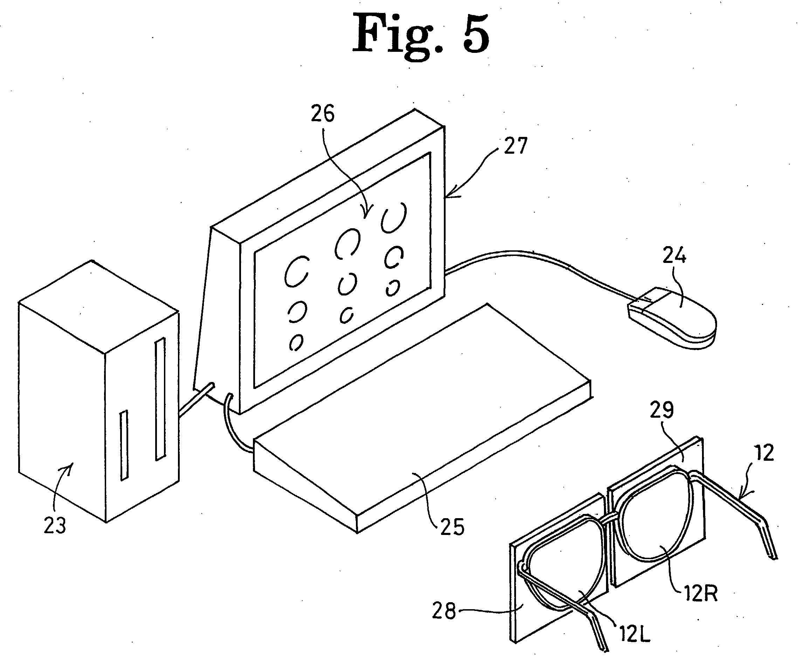

As a result, optical characteristic image data 20 as the pattern projecting images as shown in Fig. 4 and scale image data 21 are stored in a frame memory of the digital camera 19. Then, as shown in Fig. 5, an individual is accessible to an optical shop (not shown) by use of a personal computer 23 through the Internet to send the optical characteristic image data 20 and scale image data 21 to the optical shop. The optical shop computes an optical characteristic, e.g. degrees of the eyeglasses based on the optical characteristic image data 20 and scale image data. In this case, the individual gets access to the home page of the optical shop to represent a visual acuity examining chart 26 on an image plan of a monitor 27 by operating a mouse 24 and a keyboard 25. In such condition that an individual wears the eyeglasses with frame, if information regarding a visible degree at the time of viewing the visual acuity examining chart 26 through the lenses of the worn eyeglasses with frame 12 is obtained, it is possible to judge whether the lenses 12R 12L are good based on the information obtained. Also, if it is possible to provide as information how to view viewing marks of the visual acuity examining 26 through visibility compensating lenses 28 and 29, judgment about whether the lenses are good can be more effectively accomplished.

Note that, in the embodiment, the visibility compensating lenses 28 and 29 have, for example, +0.5 diopter, -0.5 diopter. These visibility compensating lenses 28 and 29 may be made of, for example, Fresnel lenses. This measuring instrument may be distributed, for example as supplements of a communication sale because the measuring instrument may be a type of assembly and inexpensively produced compared with a lens meter for a business. Also, it may be delivered at free of charge from an optical shop to a person. Similarly, the visibility compensating lenses may, also, be delivered as supplements. Accordingly, an individual can photograph optical characteristic image data by use of the owned digital camera 19. Collection of the optical characteristic image data can make operation of optical characteristic of the lenses 12R, 12L in eyeglasses with frames 12.

### (SECOND EMBODIMENT)

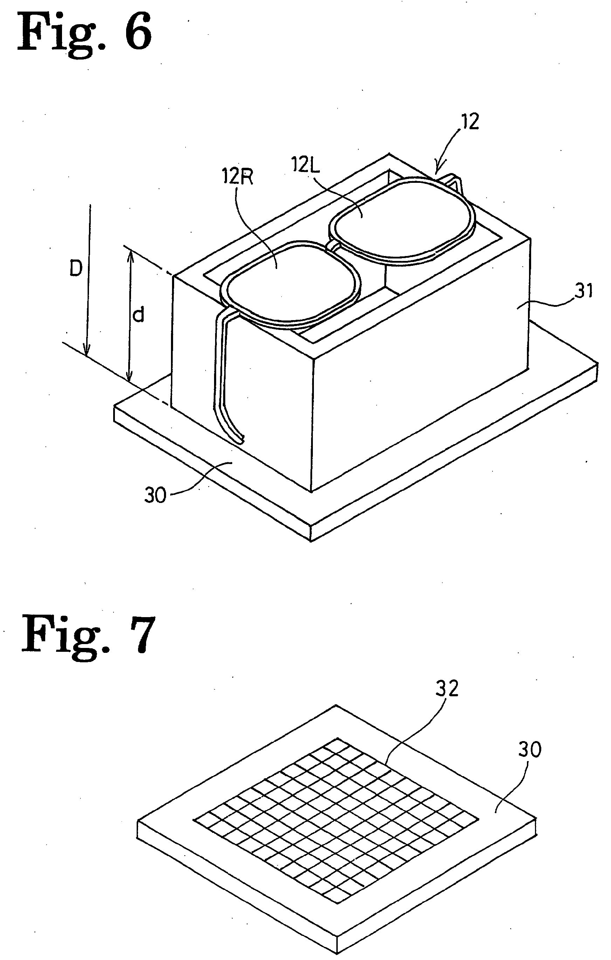

Fig. 6 is a schematic view showing the other example of an optical characteristic measuring instrument of lenses in eyeglasses with frames according to the present invention. In Fig. 6, numeral 30 denotes bottom plate, numeral 31 denotes a mounting frame. The bottom plate 30 is provided with a pattern 32 for measuring an optical characteristic. The eyeglasses with frames 12 are mounted on the mounting frame 31 to be arranged parallel to the pattern for the optical characteristic measuring pattern 32. Pattern images by the pattern 32 which is visible through the lenses 12R, 12L are zoom-photographed from the right above by use of the digital camera 19.

If the distance d between the bottom plate 30 and the lenses 12R, 12L and the distance D between the bottom plate 30 and the digital camera 19 are known, the optical characteristic can be obtained similarly to those in the first embodiment of the present invention based on the optical characteristic imaging data photographed by use of the digital camera 19.

The instrument in the second embodiment may, also, be distributed as supplements of magazines in a communication sale if the bottom plate 30 and mounting frame 31 are of a type of assembly by use of thick papers.

### (THIRD EMBODIMENT)

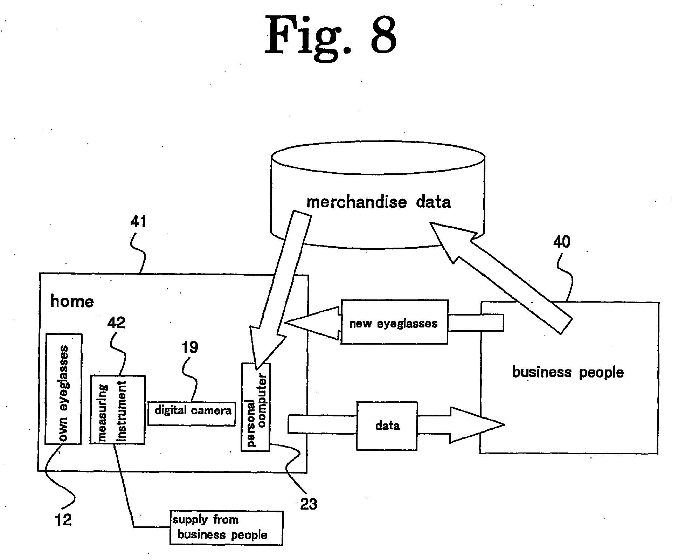

Fig. 8 shows an example of a sale system. In Fig. 8, numeral 40 denotes a business people of the optical shop etc. and numeral 41 denotes customers and numeral 42 denotes a measuring instrument. The measuring instrument is supplied from business people to the customer 41 when the instrument is requested to supply based on information of "Order made of eyeglasses enables in home" on a home page or Verner publicity etc. in the business people by the personal computer 23.

In this case, address, name, telephone number and electronic mail address of a customer are input. Explanation about how to use of the measuring instrument may be carried on the home page.

The measuring instrument 42 may, also, be supplied as a set with a catalog in communication sale. In this case, the sales people usually obtain the address, name, telephone number and electronic male address of the customer with member's number etc. Accordingly, again, it is not necessary to know the address and name etc. of the customer when the business people in the optical shop tie up with the sales people.

The customer 41 photographs the pattern images obtained through the lenses 12R, 12L by the hand type-digital camera 19, connects the digital camera with the personal computer 23 by USB and sends the pattern images as electronic data to the business people through the Internet.

In this case, the business people cause the customer to be accessible to the home page of the business people and to respond to questions in each item of a check box on the home page.

For example, the questions are the present wearing eyeglasses 12 unsuitable, e.g. can you read the newspaper, and are your eyes dim during driving, are checked with the check box, so that the pattern images of the lenses which have been sent can be more precisely analyzed.

Also, it is possible to give still more suitable advise to enhance satisfaction of the customer if electronic conversation check box items are provided, after image data is sent, the customer has a conversation with the sales person.

As described above, the order of lenses can be accomplished, in this case, frames and a kind of lenses can be selected by having access to article data base.

Note that, precision of making the lenses is still more enhanced if the customer come to the optical shop effects an eye test, since the optical shop has eye test data of the customer.

According to such a sale system, even a physically handicapped person can effect the order made of the lenses as the person sits in the home.

According to the measuring method of the present invention, it is possible to obtain simply the pattern images through the lenses in the eyeglasses with frames which is a base of the finally obtained optical characteristic.

According to the measuring instrument of the present invention, it is possible to miniaturize the instrument and obtain inexpensively and simply the pattern images got through the lenses in the eyeglasses with frames.

According to the collecting system of the present invention, it is possible to collect the pattern images as image data, analyze them in the optical shop etc. and compute the optical characteristic of the lenses in the eyeglasses with frames which have been sent.

According to the collecting system of the present invention, the degrees of the lenses in the eyeglasses worn by the user as optical characteristic values obtained based on the optical characteristic image data can be compensated by visible degrees of the eye sight examining chart through a visibility compensating lens in condition of wearing the eyeglasses.

According to the optical characteristic measuring method of the present invention, it is possible to photograph by use of an independent digital camera separated from an apparatus e.g. a hand-type digital camera.

A compensation for magnification and aberration of the unspecified digital camera enables because magnification and aberration compensating scales are disposed on a screen.

According to the sale system of the present invention, it is possible to accept the order of lenses in eyeglasses with frames from the customer's home. That is, the customer can measure the degrees of the lenses in the eyeglasses owned by the customer by use of the measuring instrument which makes only pattern images representing the degrees of the lenses.

Accordingly, the business people can distribute the measuring instrument to the customer at low cost.

Although preferred embodiments of the present invention have been described in detail, it should be understood by those skilled in the art that various other modifications and changes may be made to the illustrated embodiments without departing from the scope of the invention as described in the specification and defined in the appended claims.

## Claims

1. A method for measuring an optical characteristic of lenses in eyeglasses with frames comprising: the step of photographing pattern images of patterns for optical characteristic measurement visible through said lenses.

2. A method for measuring an optical characteristic of lenses in eyeglasses with frames comprising the steps of:
illuminating said lenses with a illuminated light;
projecting pattern images of patterns for optical characteristic measurement through said lenses on a screen; and
photographing said pattern projecting images by a digital camera.

3. An optical characteristic measuring instrument for lenses in eyeglasses with frames comprising:
patterns for optical characteristic measurement; and
a mounting frame for mounting said lenses in parallel to said patterns,
wherein pattern images of said patterns visible through said lenses based on an illuminated light are used to photograph by a digital camera.

4. An optical characteristic measuring instrument for lenses in eyeglasses with frames comprising:
engaged standing plates for engaging said eyeglasses with frames; and
a screen which is provided on one of said engaged standing plates and on which pattern projecting images of patterns for optical characteristic measurement are projected,
wherein said pattern projecting images are projected through said lenses based on an illuminated light and are used to photograph by a digital camera.

5. A collecting system for optical characteristic image data comprising:
forming pattern images of patterns for optical characteristic measurement which are visible through lenses in eyeglasses with frames and are photographed by a digital camera; and
collecting said pattern images as optical characteristic image data through the Internet.

6. A collecting system for optical characteristic image data comprising: forming pattern projecting images of patterns for optical characteristic measurement which are projected through lenses in eyeglasses with frames and are photographed by a digital camera; and
collecting said pattern images as optical characteristic image data through the Internet.

7. A collecting system for optical characteristic image data according to claim 5, wherein a visible degree of an eye sight chart presented on a monitor screen through a visibility compensating lens in condition of wearing the eyeglass is collected together with said optical characteristic image data through the Internet.

8. A collecting system for optical characteristic image data according to claim 6, wherein a visible degree of an eye sight chart presented on a monitor screen through a visibility compensating lens in condition of wearing the eyeglasses is collected together with said optical characteristic image data through the Internet. the Internet.

9. An optical characteristic measuring method according to claim 2,
wherein said screen is disposed between the lenses and digital camera to enable measurement by an unspecified digital camera.

10. An optical characteristic measuring method according to claim 2,
wherein a standard scale is disposed on said screen to enable measurement by an unspecified digital camera and compensation for photographing magnification or distorted aberration of the digital camera.

11. A sale system comprising:
using a measuring instrument which measures lenses in eyeglasses with frames and is supplied to the home of a customer; and making and providing lenses based on data measured by said measuring instrument.

12. A sale system according to claim 11, wherein said data measured by said measuring instrument includes image data which is analyzed to compute data necessary to make lenses, and based on newly computed data, lenses in eyeglasses with frames are made and supplied to a customer.

13. A sale system according to claim 11, wherein measured effect of said measuring instrument is produced as an image.

14. A sale system comprising: sending image data which is produced by a measuring instrument and is photographed by a digital camera owned by a customer to business people;
analyzing said image data by the business people to compute data necessary to make lenses in eyeglasses with frame;
making lenses in eyeglasses with frames based on said newly computed data; and
providing said lenses made to the customer.
